# EUROPÄISCHE PATENTANMELDUNG

(11) **EP 3 686 555 A1**
(43) Veröffentlichungstag der Anmeldung: **29.07.2020**
(21) Anmeldenummer: 19153732.3
(22) Anmeldetag: 25.01.2019
(51) Int. Cl.: G01C 21/16, G01C 21/20, B63B 43/00

(54) **VORRICHTUNG ZUM ÜBERWACHEN EINES WASSERFAHRZEUGS UND WASSERFAHRZEUGÜBERWACHUNGSSYSTEM**

(71) Anmelder: Bauer Safety Engineering GmbH, 89518 Heidenheim (DE)
(72) Erfinder: Bauer, Hermann, 89518 Heidenheim (DE)
(74) Vertreter: Bucher, Ralf Christian

(57) **Zusammenfassung**

Es wird eine Vorrichtung (10) zum Überwachen eines Wasserfahrzeugs (11) beschrieben, die eine mehrachsige inertiale Messeinheit zur Bewegungsdetektion des Wasserfahrzeugs (11) und eine Messdatenverarbeitungseinheit aufweist, die konfiguriert ist, Messdaten der Messeinheit zu empfangen und derart zu verarbeiten, dass aus den empfangenen Messdaten eine Koppelnavigation berechnet wird und auf das Wasserfahrzeug einwirkende Ereignisse in und/oder um mindestens eine Achse der Messeinheit ermittelt werden.

## Beschreibung

Die vorliegende Beschreibung betrifft eine Vorrichtung zum Überwachen eines Wasserfahrzeugs gemäß Anspruch 1, ein Datenverarbeitungssystem gemäß Anspruch 8, ein Wasserfahrzeugüberwachungssystem gemäß Anspruch 9 und einen Computer gemäß Anspruch 10.

Aus der britischen Patentanmeldung GB 2242330 A1 ist ein Überwachungssystem für Notfallereignisse eines Schiffs bekannt. Das System weist eine Steuereinheit zum Empfangen von Eingangssignalen von bordseitigen Mikrofoneinheiten des Schiffs, von einem Messdatenerfassungs-Computer und von einem bordseitigen Radar auf. Die Steuereinheit erzeugt Ausgangssignale abhängig von den empfangenen Eingangssignalen zum Aufzeichnen auf ein Bandgerät. Das System ermöglicht somit eine umfassende Aufzeichnung elektrischer Signale, die an Bord des Schiffs erzeugt werden und die später ausgewertet werden können, um beispielsweise die Ursache eines Notfalls ermitteln zu können.

Nachfolgend werden eine Vorrichtung zum Überwachen eines Wasserfahrzeugs, ein Datenverarbeitungssystem, ein Wasserfahrzeugüberwachungssystem und ein zur Verwendung in einem solchen Wasserfahrzeugüberwachungssystem konfigurierter Computer beschrieben.

Gemäß einem ersten Aspekt ist eine Vorrichtung zum Überwachen eines Wasserfahrzeugs offenbart, die eine mehrachsige inertiale Messeinheit zur Bewegungsdetektion des Wasserfahrzeugs und eine Messdatenverarbeitungseinheit aufweist, die konfiguriert ist, Messdaten der Messeinheit zu empfangen und derart zu verarbeiten, dass aus den empfangenen Messdaten eine Koppelnavigation berechnet wird und auf das Wasserfahrzeug einwirkende Ereignisse in und/oder um mindestens eine Achse der Messeinheit ermittelt werden. Mit einer derartigen Vorrichtung können verschiedene Ereignisse detektiert werden, wie beispielsweise Ereignisse, die einen Aufprall als Ursache haben, oder ein anderes relevantes Ereignis, das nicht unbedingt einen Aufprall als Ursache haben muss, aber insbesondere für einen Schiffsführer von Bedeutung sein kann, wie die Erkennung und Messung der Wellenhöhe (Auf- und Ab- sowie Rollbewegung eines Wasserfahrzeugs). Insbesondere ist es mit der Vorrichtung möglich, festzustellen, wann ein Wasserfahrzeug einen Aufprall erfährt, beispielsweise wenn das Wasserfahrzeug mit einem Objekt wie einem anderen Wasserfahrzeug kollidiert ist, einen Aufprall in horizontaler Richtung erlitten hat oder es den Grund berührt hat. Durch die mehrachsige inertiale Messeinheit können vor allem Ereignisse ermittelt werden, die in oder aus verschiedenen Richtungen auf das Wasserfahrzeug einwirken, beispielsweise Stöße in Richtung einer Z-Achse eines Wasserfahrzeugs, die auftreten können, wenn das Wasserfahrzeug den Grund berührt, und/oder Stöße in Richtung einer X- und/oder Y-Achse des Wasserfahrzeugs, die auftreten können, wenn das Wasserfahrzeug in horizontaler Richtung mit einem im Wasser befindlichen Objekt kollidiert.

Insbesondere weist die mehrachsige inertiale Messeinheit ein 6-Achsen-Inertialmodul auf, das einen 3-achsigen Beschleunigungssensor und ein 3-achsiges Gyroskop umfasst. Beispielsweise kann als 3-achsiger Beschleunigungssensor und als 3-achsiges Gyroskop ein integrierter mikromechanischer Sensor verwendet werden, der zum Einsatz im Automobilbereich vorgesehen ist, wie beispielsweise das System ASM330LHH des Unternehmens STMicroelectronics. Ein 6-Achsen-Inertialmodul ermöglicht vor allem, auch über einen längeren Zeitraum eine exakte Position eines Wasserfahrzeugs über Koppelnavigation zu ermitteln und beizubehalten. Mittels hochauflösender Längs- sowie Drehratensensierung kann durch ein 6-Achsen-Inertialmodul damit eine hochpräzise Navigation als Basis für eine permanent verfügbare exakte Position mit Fahrtrichtung und Geschwindigkeit ermöglicht werden. Zusätzlich zu einer solchen hochpräzisen Navigation, die auf der relativ trägen Dynamik eines Wasserfahrzeugs wie eines Schiffes basiert, können mit dem 6-Achsen-Inertialmodul auch hochdynamische Ereignisse in und um alle Achsen registriert und aufgezeichnet werden, wodurch das Erkennen von von Havarien eines Wasserfahrzeugs jeglicher Art erleichtert werden kann. Kurz zusammengefasst ermöglicht ein 6-Achsen-Inertialmodul eine exakte Aufzeichnung von Ereignissen orts-, zeit- und geschwindigkeitsabhängig.

Die Vorrichtung kann auch einen Empfänger für Signale von mindestens einem globalen Navigationssatellitensystem aufweisen, der Positionsdaten anhand empfangener Signale ermittelt und der Messdatenverarbeitungseinheit zur Verfügung stellt, der sie bei der Verarbeitung der Messdaten der Messeinheit berücksichtigen kann. Als Empfänger kann beispielsweise der Mikrochip STA8089FG des Unternehmens STMicroelectronics eingesetzt werden, der Signale der globalen Navigationssatellitensysteme GPS, Galileo, GLONASS, BeiDou und QZSS empfangen und aus den empfangenen Signalen Positionsdaten ermitteln kann.

Weiterhin kann die Vorrichtung einen Speicher zum Ablegen von von der Messdatenverarbeitungseinheit berechneten Koppelnavigationsdaten und/oder von Daten zu von der Messdatenverarbeitungseinheit detektierten Ereignissen aufweisen. Der Speicher kann beispielsweise als Ringspeicher ausgebildet sein, sodass für einen gewissen Überwachungszeitraum vom beispielsweise mehreren Stunden, Tagen, Wochen oder sogar Monaten Koppelnavigationsdaten und/oder Ereignisdetektionsdaten gespeichert werden können, bis ältere gespeicherte Daten wieder durch neuere überschrieben werden. Die Speichergröße wird insbesondere nicht nur abhängig vom Zeitraum, sondern auch von der Auflösung der zu speichernden Daten gewählt. Durch den Speicher wird ein autarker Einsatz der Vorrichtung auch ohne Anbindung an bordeigene Instrumente eines Wasserfahrzeugs und an ein Datennetz ermöglicht. Die Verfügbarkeit von aufgezeichneten und im Speicher abgelegten Daten ist damit auch vor Anker bzw. an einem Liegeplatz des Wasserfahrzeugs möglich.

Die Vorrichtung kann zudem einen Sender zum Übertragen von von der Messdatenverarbeitungseinheit berechneten Koppelnavigationsdaten und/oder von Daten zu von der Messdatenverarbeitungseinheit detektierten Ereignissen aufweisen. Der Sender kann beispielsweise als drahtloses Sendemodul, beispielsweise als Funkmodul zur Datenübertragung gemäß einem Funkübertragungsstandard wie IEEE 802.11 für drahtlose lokale Funknetze ausgebildet sein. Bei der Implementierung des Senders als Funkmodul kann die Vorrichtung beispielsweise als Elektronikmodul ausgebildet sein, das in einem vor Wasser und Hitze schützenden Gehäuse mit autarker Stromversorgung durch beispielsweise eine wiederaufladbare Batterie montiert sein kann, sodass ein kompaktes und für die Anforderungen zum Einsatz in einem Wasserfahrzeug wie einem Schiff geeignetes Gerät erhalten wird, dass beispielsweise in einem Schiffsrumpf zum Ermitteln von auf das Schiff einwirkenden Ereignissen platziert werden kann.

Außerdem kann die Vorrichtung einen Router zum Weiterleiten von Daten aufweisen, die vom Sender empfangen wurden, an ein sich außerhalb des Wasserfahrzeugs befindliches Datenverarbeitungssystem. Der Router kann beispielsweise dazu ausgebildet sein, vom Sender empfangene Daten an eine Internetplattform für die Überwachung von Wasserfahrzeugen zu übermitteln, beispielsweise über eine Mobilfunk- oder Satellitenfunk-Datenverbindung. Somit kann eine zentrale Überwachung eine Vielzahl von Wasserfahrzeugen über das Datenverarbeitungssystem implementiert werden.

Der Sender und/oder der Router können bzw. kann auch ausgebildet sein, Daten zwischen zu speichern, wenn der Router aktuell nicht verfügbar ist, beispielsweise weil er keine Datenverbindung zum Datenverarbeitungssystem erstellen kann oder keine ausreichende Spannungsversorgung hat.

Die Vorrichtung kann zudem eine Schnittstelle zum Konfigurieren von Parametern der Vorrichtung, zum Auslesen des aktuellen Status der Vorrichtung, zum Auslesen von in der Vorrichtung gespeicherten Daten und/oder zur Kommunikation mit der Vorrichtung aufweisen. Bei der Schnittstelle kann es sich beispielsweise um eine Mensch-Maschine-Schnittstelle wie eine Tastatur, einen Bildschirm und/oder dergleichen HMI-Interface handeln. Die Schnittstelle kann auch als drahtgebundene oder drahtlose Kommunikationsschnittstelle ausgebildet sein. Beispielsweise kann sie als eine Funkschnittstelle nach dem Bluetooth®-Standard zum Verbinden mit einem anderen Gerät wie beispielsweise einem Computer oder einem Smartphone implementiert sein. Denkbar ist es auch, dass die Schnittstelle zum Anschließen von Eingabe- und/oder Ausgabemitteln wie einer Tastatur bzw. einer Anzeige ausgebildet ist.

Gemäß einem zweiten Aspekt ist ein Datenverarbeitungssystem offenbart, das zum Empfangen, Speichern und Verarbeiten von Daten von mindestens einer Vorrichtung wie hierin offenbart konfiguriert ist, wobei das Verarbeiten das Erzeugen einer Darstellung einer Fahrtroute eines Wasserfahrzeugs und/oder von detektierten, auf das Wasserfahrzeug eingewirkten Ereignissen umfassen kann. Ein derartiges Datenverarbeitungssystem kann beispielsweise in Form einer Internetplattform für die Überwachung von Wasserfahrzeugen implementiert werden. Damit ist die Überwachung von Wasserfahrzeugen aus der Ferne zentral möglich. Insbesondere können Routen von Wasserfahrzeugen nachverfolgt und aufgezeichnet sowie besondere Ereignisse, die auf Wasserfahrzeuge einwirkten, wie beispielsweise ein Aufprall eines Schiffs mi einem Objekt, überwacht und aufgezeichnet werden.

Gemäß einem dritten Aspekt ist ein Wasserfahrzeugüberwachungssystem offenbart, das mindestens eine Vorrichtung und ein Datenverarbeitungssystem wie hierin offenbart aufweist. Ein derartiges System kann beispielsweise so implementiert werden, dass ein allgemein verfügbares Datennetz zur Übertragung von Daten zwischen mehreren Vorrichtungen und dem Datenverarbeitungssystem genutzt wird, beispielsweise das Internet, wobei das Datenverarbeitungssystem durch einen Internet-Server realisiert werden kann. Es ist auch möglich, das Datenverarbeitungssystem als einen über spezielle Datenverbindungen wie ein VPN (virtuelles privates Netzwerk) erreichbaren Server zu implementieren, wobei dann die Vorrichtungen ausgebildet sein können, VPN- Verbindungen zu dem Server zum Übertragen von Daten aufzubauen. Das Wasserfahrzeugüberwachungssystem kann zudem so ausgebildet sein, dass es den Zugriff auf gespeicherte Daten über Endgeräte wie Personal Computer, Smartphones, Tablet-Computer und dergleichen Geräte ermöglicht. Insbesondere kann eine App zur Verfügung gestellt werden, die auf insbesondere mobilen Endgeräten wie Smartphones und Tablet-Computern installiert werden kann und einen Zugriff auf die Daten des Wasserfahrzeugüberwachungssystems ermöglicht. Somit kann durch ein derartiges Wasserfahrzeugüberwachungssystem eine Plattform implementiert werden, welche die komfortable Überwachung von Wasserfahrzeugen mittels insbesondere mobiler Endgeräte ermöglicht.

Gemäß einem vierten Aspekt ist ein Computer offenbart, der mindestens einen Prozessor und einen Speicher aufweist, in dem ein Programm gespeichert ist, das den Prozessor derart konfiguriert, dass eine Datenverbindung zu einem Datenverarbeitungssystem wie hierin offenbart hergestellt werden kann und über die Datenverbindung vom Datenverarbeitungssystem Daten zu einer Route eines Wasserfahrzeugs und/oder zu auf ein Wasserfahrzeug eingewirkten Ereignissen auf den Computer heruntergeladen und von diesem verarbeitet werden können. Der Computer kann beispielsweise ein Smartphone, ein Personal Computer oder ein Tablet-Computer sein, in dessen Speicher eine App oder ein spezielles Programm abgelegt ist, dass den mindestens einen Prozessor des Computers wie vorstehend beschrieben konfiguriert. Damit wird es komfortabel ermöglicht, mit einem insbesondere mobilen Computer Wasserfahrzeuge zu überwachen.

Weitere Merkmale ergeben sich aus der nachfolgenden Beschreibung in Verbindung mit den in den Zeichnungen dargestellten Ausführungsbeispielen.

Die Zeichnungen zeigen in
Fig. 1 ein Blockschaltbild eines Ausführungsbeispiels einer Vorrichtung zur Überwachung eines Wasserfahrzeugs; und
Fig. 2 schematisch ein System zur Überwachung von Wasserfahrzeugen, die jeweils mit einer Vorrichtung von Fig. 1 ausgestattet sind.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht einschränkend zu verstehen.

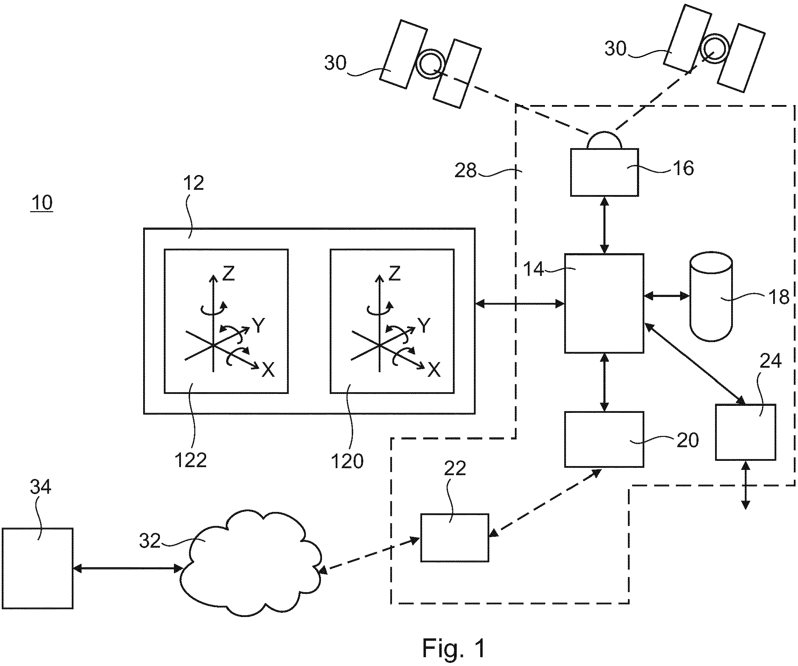

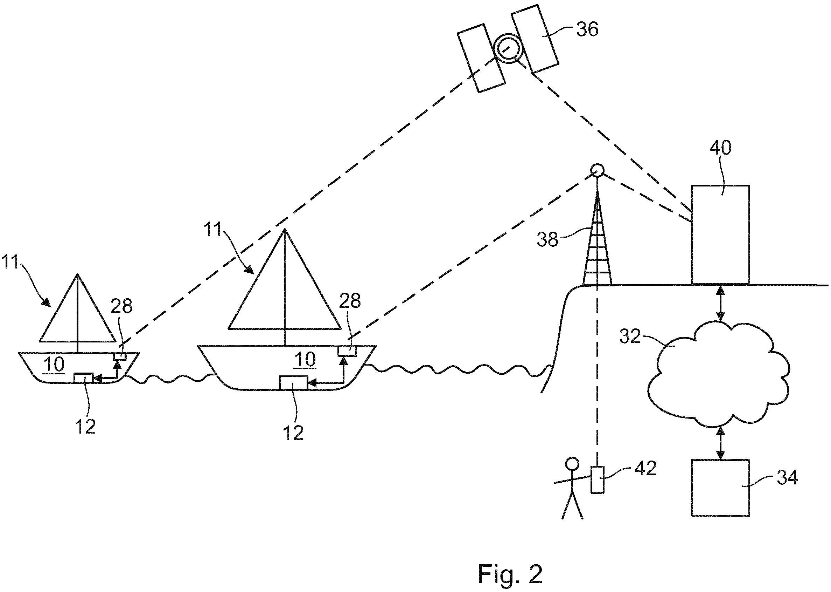

Figur 1 zeigt ein Blockschaltbild einer Vorrichtung 10 zur Überwachung eines Wasserfahrzeugs 11 (Figur 2), die im Wesentlichen aus zwei Einheiten 12 und 28 besteht.

Die Einheit 12 ist eine mehrachsige inertiale Messeinheit, die beispielsweise im Rumpf eines Wasserfahrzeugs 11 angeordnet werden kann, um auf das Wasserfahrzeug einwirkende Beschleunigungskräfte zu erfassen. Da der Rumpf eines Wasserfahrzeugs, beispielsweise der Schiffsrumpf in der Regel aus einer äußerst starken Struktur besteht, um äußeren Belastungen möglichst ohne jegliche elastische Verformung entgegenstehen zu können, nimmt er Vibrationen und Schocks, die beispielsweise bei einer Kollision auftreten können, mechanisch sehr effizient auf, und kann diese daher auch nahezu unmittelbar an die mit ihm mechanisch gekoppelte Einheit 12 weitergeben. Denkbar sind selbstverständlich auch andere mögliche Stellen eines Wasserfahrzeugs, an dem die Einheit 12 derart befestigt werden kann, dass die bei Vibrationen und Schocks auftretenden Beschleunigungskräfte möglichst unmittelbar auf die Einheit 12 übertragen werden.

Die Einheit 12 weist ein 6-Achsen-lnertialmodul auf, das einen 3-achsigen Beschleunigungssensor 120 und ein 3-achsiges Gyroskop 122 umfasst, die als integrierte mikromechanische Schaltung(en) implementiert sein können. Der 3-achsige Beschleunigungssensor 120 erfasst Beschleunigungskräfte in drei Orthogonalachsen X, Y und Z. Das 3-achsige Gyroskop 122 erfasst Drehbeschleunigungen um die drei Orthogonalachsen X, Y und Z. Somit können auf ein Wasserfahrzeug einwirkende Stoßkräfte in den Orthogonalachsen, wie sie beispielsweise bei Kollisionen auftreten, sowie um die Orthogonalachsen auf das Wasserfahrzeug wirkende Drehkräfte, wie sie beispielsweise beim Kentern eines Wasserfahrzeugs auftreten, mit der Einheit 12 erfasst werden.

Die von der Einheit 12 erfassten Beschleunigungen werden als Messdaten an einen Prozessor 14 der Einheit 28 übertragen. Der Prozessor 14 ist durch ein entsprechendes Programm, beispielsweise durch eine Firmware derart als Messdatenverarbeitungseinheit konfiguriert, dass er aus den empfangenen Messdaten eine Koppelnavigation zum Ermitteln der Route des Wasserfahrzeugs berechnen kann und/oder die Messdaten auf ungewöhnliche Ereignisse hin auswerten kann. Hierzu kann der Prozessor 14 konfiguriert sein, anhand der Messdaten festzustellen, ob in und/oder um eine der Achsen X, Y und Z eine ungewöhnlich hohe Beschleunigung gemessen wurde, die insbesondere nicht durch eine normale Navigation des Wasserfahrzeugs hervorgerufen werden kann, sondern vielmehr durch ein besonderes Ereignis wie eine Kollision des Wasserfahrzeugs mit einem Objekt hervorgerufen wird. Typisch sind beispielsweise kurzzeitig auftretende Beschleunigungs-Peaks in den Messdaten, oder auch sehr hohe Drehbeschleunigungswerte, die höher sind als typische, auch bei starkem Wellengang auftretende Drehbeschleunigungswerte. Generell kann der Prozessor konfiguriert sein, auffällige Abweichungen der Messdaten von einem zu erwartenden Messdatenverlauf zu ermitteln. Der erwartete Messdatenverlauf kann insbesondere anhand er Koppelnavigation ermittelt werden. Es können auch die berechneten Koppelnavigationswerte auf ungewöhnliche Routenänderungen vom Prozessor überprüft werden und mit den Beschleunigungsdaten korreliert werden. Zeigt sich beispielsweise eine Korrelation von ungewöhnlichen Beschleunigungsdaten während eines bestimmten Zeitraums und einer abrupten Routenänderung auf Basis der berechneten Koppelnavigation, kann der Prozessor beispielsweise ein auf das Wasserfahrzeug einwirkendes Ereignis wie eine Kollision mit einem Objekt ermitteln. Anstelle eines durch ein Programm entsprechend konfigurierten Prozessors kann die Messdatenverarbeitungseinheit auch durch eine entsprechend konfigurierte programmierbare Logikschaltung, beispielsweise ein FPGA (Field Programable Gate Array), implementiert werden.

Die Einheit 28 kann zudem einen Empfänger 16 für Signale von einem oder mehreren globalen Satellitennavigationssystemen 30 aufweisen. Die von diesem Empfänger 16 anhand der empfangenen Satellitennavigationssystem-Signale ermittelten Positionsdaten des Wasserfahrzeugs können dem Prozessor 14 zur Verfügung gestellt werden, der sie bei der Verarbeitung der Messdaten von der Messeinheit 12 wie folgt berücksichtigen kann: beispielsweise kann der Prozessor 14 berechnete Koppelnavigationsdaten anhand der vom Empfänger 16 empfangenen Positionsdaten verifizieren. Der Prozessor 14 kann auch derart konfiguriert sein, dass er die Route des Wasserfahrzeugs primär anhand der Positionsdaten vom Empfänger 16 ermittelt, und eine Koppelnavigation nur dann berechnet, wenn keine Signale von einem Satellitennavigationssystem 30 empfangen werden können. Der Prozessor 14 kann zudem die Positionsdaten des Empfängers 16 mit den anhand der Messdaten berechneten Koppelnavigation fusionieren, umso eine hochpräzise Berechnung der Route des Wasserfahrzeugs ermöglichen zu können.

Die Einheit Typ 28 weist zudem einen Speicher 18, beispielsweise einen nichtflüchtigen programmierbaren Speicher, wie einen Flash-Speicher auf, in dem der Prozessor 14 berechnete Koppelnavigationsdaten und Daten zu ermittelten Ereignissen speichern kann. Der Speicher 18 kann als Ringspeicher ausgeführt sein, sodass die ältesten Daten im Speicher durch die neuesten Daten überschrieben werden, wenn der Speicher voll ist.

Weiterhin kann die Einheit 28 einen Sender 20 aufweisen, der mit dem Prozessor 14 kommunikationsmäßig verbunden ist. Der Sender 20 dient zum Übertragen von Koppelnavigationsdaten und Daten zu ermittelten Ereignissen an einen Router 22. Insbesondere kann der Sender 20 als Funkmodul implementiert sein, das beispielsweise zur Datenkommunikation per Nahbereichsfunk wie WLAN (Wireless local Area Network)-Modul und/oder Bluetooth® ausgebildet ist. Denkbar ist auch, dass der Sender 20 zusätzlich oder alternativ zur drahtgebundenen Datenkommunikation ausgebildet ist, beispielsweise eine LAN (Local Area Network)- und/oder USB (Universal Serial Bus)- Schnittstelle aufweist.

Der Sender 20 kommuniziert mit dem bereits erwähnten Router 22, der zum Weiterleiten der vom Sender 20 empfangenen Daten an ein Datenverarbeitungssystem 34 konfiguriert ist. Der Router 22 ist hierzu ausgebildet, über ein Datennetz 32 mit dem Datenverarbeitungssystem 34 zu kommunizieren. Bei dem Datennetz 32 kann sich insbesondere um ein öffentliches Datennetz wie dem Internet oder um ein privates Datennetz wie ein VPN (Virtual Private Network) handeln.

Die Einheit 28 weist schließlich noch eine Schnittstelle 24 auf, über die insbesondere Parameter der Vorrichtung 10 konfiguriert werden können, wie beispielsweise die Empfindlichkeit der Messeinheit 12 und Parameter des vom Prozessor 14 zum Auswerten der Messdaten ausgeführten Programms. Die Schnittstelle 24 kann zudem ein Zugriff auf den Speicher 18 über den Prozessor 14 ermöglichen, so dass in den Speicher 18 abgelegte Daten abgerufen werden können. Die Schnittstelle kann als Mensch-Maschine-Schnittstelle ausgebildet sein, also insbesondere eine Ein- und Ausgabevorrichtung wie Tastatur, Monitor und dergleichen umfassen. Sie kann aber auch als Hardwareschnittstelle ausgebildet sein, die einerseits mit dem Prozessor 14 kommunikationsmäßig verbunden ist, und die andererseits mit einem externen Gerät wie einem Datenein-/ausgabegerät, beispielsweise eine Tastatur, einem Bildschirm, einem Computer und dergleichen kommunikationsmäßig verbunden werden kann. Beispielsweise kann es sich bei der Schnittstelle 24 um eine USB-Schnittstelle handeln, die den Anschluss von handelsüblichen Datenein-/ausgabegeräten wie Tastaturen und Monitoren oder von Computern ermöglicht.

Die Einheiten 14, 18, 20 und 24 können beispielsweise durch einen Mikrocontroller und eine entsprechende Firmware implementiert sein. Die Einheit 16 kann durch eine integrierte Schaltung implementiert sein. Die Einheit 22 kann durch einen mobilen Router implementiert sein, und kann wie dargestellt Teil der Einheit 28 sein oder als externes, von der Einheit 28 separates Gerät implementiert sein.

Eine Verkabelung zwischen den Einheiten 12 und 28 ist insbesondere für den Einsatz in einem Wasserfahrzeug ausgelegt und weist hierzu vorzugsweise wasserdichte Steckverbindungen gemäß dem Schutzstandard IP 67 oder höher auf. Dies gilt auch für die Energieversorgung der Vorrichtung 10. Alle Verkabelung sind für eine robuste Datenübertragung bzw. Stromversorgung auch über mehrere Meter ausgelegt, da beispielsweise die Einheit 12 im Rumpf eines Wasserfahrzeugs angeordnet sein kann, während der Einheit 28 möglichst nahe am Deck des Wasserfahrzeugs für eine möglichst ungehinderte Funkkommunikation angeordnet wird.

Figur 2 zeigt nun ein System zur Überwachung von Wasserfahrzeugen 11, die jeweils mit der Vorrichtung 10 ausgestattet sind. In den beiden gezeigten Segelbooten 11 ist jeweils ganz unten im Rumpf die Messeinheit 12 der Vorrichtung 10 montiert, um möglichst effizient Erschütterungen bzw. die durch Erschütterung hervorgerufenen und auf das jeweilige Segelboot 11 einwirkenden Beschleunigungskräfte erfassen zu können. Getrennt davon ist die Einheit 28 idealerweise an Deck des jeweiligen Bootes 11 platziert, sodass der Router der Einheit 28 eine möglichst ungehinderte Datenkommunikation mit dem Datenverarbeitungssystem 34 aufbauen kann und der Empfänger 16 Satellitennavgiationssignale unter möglichst guten Bedingungen empfangen kann. Der Router kann bei permanent existierender Datenverbindungen fortlaufend mit dem Datenverarbeitungssystem 34 kommunizieren, d.h. Daten an dieses übertragen. Bei teilweiser Unterbrechung der Datenverbindung kann der Router so konfiguriert sein, dass er größere abgespeicherte Datenpakete an das Datenverarbeitungssystem übermittelt, sobald wieder eine Datenverbindung zu diesem besteht.

In Figur 2 sind zwei unterschiedliche Datenverbindungen der beiden Boote 11 beispielhaft gezeigt: bei einem der Boote, das sich näher an einem Mobilfunkmasten 38 befindet, kann der Router eine Datenverbindung über ein Mobilfunknetz zu dem Mobilfunkmasten 38 aufbauen, während der Router des anderen Bootes, das sich weiter weg von der Küste und damit vom Mobilfunkmasten 38 befindet, aufgrund der großen Entfernung zum Mobilfunkmasten 38 keine Datenverbindung mit diesen aufbauen kann und daher über ein Satellitenkommunikationssystem 36 eine Datenverbindung zum Datenverarbeitungssystem 34 aufbaut. Beide Datenverbindungen laufen über ein Gateway 40, welches einen Übergangspunkt zu einem Datennetz 32, mit dem auch das Datenverarbeitungssystem 34 kommunikationsmäßig verbunden ist, bildet. Das Datennetz 32 kann beispielsweise ein öffentliches Datennetz wie das Internet sein.

Ein Benutzer des Systems kann beispielsweise mit einem mobilen Endgerät wie einem Smartphone 42 auf das Datenverarbeitungssystem 34 zugreifen. Hierzu baut das Smartphone 42 eine Datenverbindung beispielsweise über ein Mobilfunknetz (zum Beispiel über den Mobilfunkmasten 38) und dem Datennetz 32 mit dem Datenverarbeitungssystem 34 auf. Hierzu kann auf dem Smartphone 42 eine spezielle App installiert sein, die das Smartphone 42 zur Benutzung mit dem Wasserfahrzeugüberwachungssystem konfiguriert. Die App ermöglicht es dem Benutzer des Smartphones 42, sich auf einem Datenverarbeitungssystem 34 einzuloggen und beispielsweise für den Benutzer registrierte Wasserfahrzeuge wie die Segelboote 11 zu überwachen. Insbesondere kann der Benutzer auf sein Smartphone gefahrene Routen der Segelboote 11 abrufen und anzeigen und besondere Ereignisse auf diesen Routen abfragen, beispielsweise Havarien oder Zusammenstöße mit Objekten.

Das Datenverarbeitungssystem 34 kann insbesondere als über das Internet erreichbarer Server implementiert sein, auf denen über insbesondere gesicherte, d.h. verschlüsselte Datenverbindungen zugegriffen werden kann, sowohl von den auf den Booten 11 installierten Vorrichtungen 10 aus als auch von Endgeräten wie dem Smartphone 42 von Benutzern aus. Somit kann eine Plattform zur Überwachung von Wasserfahrzeugen wie beispielsweise Segelbooten implementiert werden, die es ermöglichen, Routen von Wasserfahrzeugen und während dieser Routen ungewöhnliche, auf die Wasserfahrzeuge einwirkende Ereignisse aus der Ferne zu speichern und abzufragen.

## Patentansprüche

1. Vorrichtung (10) zum Überwachen eines Wasserfahrzeugs (11) aufweisend
- eine mehrachsige inertiale Messeinheit (12) zur Bewegungsdetektion des Wasserfahrzeugs (11) und
- eine Messdatenverarbeitungseinheit (14), die konfiguriert ist, Messdaten der Messeinheit zu empfangen und derart zu verarbeiten, dass aus den empfangenen Messdaten eine Koppelnavigation berechnet wird und auf das Wasserfahrzeug einwirkende Ereignisse in und/oder um mindestens eine Achse der Messeinheit ermittelt werden.

2. Vorrichtung nach Anspruch 1,
**dadurch gekennzeichnet, dass**
die mehrachsige inertiale Messeinheit ein 6-Achsen-Inertialmodul (12) aufweist, das einen 3-achsigen Beschleunigungssensor (120) und ein 3-achsiges Gyroskop (122) umfasst.

3. Vorrichtung nach Anspruch 1 oder 2,
ferner aufweisend
einen Empfänger (16) für Signale von mindestens einem globalen Navigationssatellitensystem (30), der Positionsdaten anhand empfangener Signale ermittelt und der Messdatenverarbeitungseinheit (14) zur Verfügung stellt, die sie bei der Verarbeitung der Messdaten der Messeinheit (12) berücksichtigt.

4. Vorrichtung nach Anspruch 1, 2 oder 3,
ferner aufweisend
einen Speicher (18) zum Ablegen von von der Messdatenverarbeitungseinheit (14) berechneten Koppelnavigationsdaten und/oder von Daten zu von der Messdatenverarbeitungseinheit (14) detektierten Ereignissen.

5. Vorrichtung nach einem der vorhergehenden Ansprüche,
ferner aufweisend
einen Sender (20) zum Übertragen von von der Messdatenverarbeitungseinheit (14) berechneten Koppelnavigationsdaten und/oder von Daten zu von der Messdatenverarbeitungseinheit (14) detektierten Ereignissen.

6. Vorrichtung nach Anspruch 5,
ferner aufweisend
einen Router (22) zum Weiterleiten von Daten, die vom Sender (20) empfangen wurden, an ein sich außerhalb des Wasserfahrzeugs befindliches Datenverarbeitungssystem (34).

7. Vorrichtung nach einem der vorhergehenden Ansprüche,
ferner aufweisend
eine Schnittstelle (24) zum Konfigurieren von Parametern der Vorrichtung, zum Auslesen des aktuellen Status der Vorrichtung, zum Auslesen von in der Vorrichtung gespeicherten Daten und/oder zur Kommunikation mit der Vorrichtung.

8. Datenverarbeitungssystem (34), das zum Empfangen, Speichern und Verarbeiten von Daten von mindestens einer Vorrichtung (10) nach einem der vorhergehenden Ansprüche konfiguriert ist, wobei das Verarbeiten das Erzeugen einer Darstellung einer Fahrtroute eines Wasserfahrzeugs (11) und/oder von detektierten, auf das Wasserfahrzeug eingewirkten Ereignissen (11) umfasst.

9. Wasserfahrzeugüberwachungssystem aufweisend mindestens eine Vorrichtung (10) nach einem der Ansprüche 1 bis 7 und ein Datenverarbeitungssystem (34) nach Anspruch 8.

10. Computer (42) aufweisend mindestens einen Prozessor und einen Speicher, in dem ein Programm gespeichert ist, das den Prozessor derart konfiguriert, dass eine Datenverbindung zu einem Datenverarbeitungssystem (34) nach Anspruch 8 hergestellt werden kann und über die Datenverbindung vom Datenverarbeitungssystem (34) Daten zu einer Route eines Wasserfahrzeugs (11) und/oder zu auf ein Wasserfahrzeug (11) eingewirkten Ereignissen auf den Computer heruntergeladen (42) und von diesem verarbeitet werden können.
